# FASCICULE DE BREVET EUROPEEN

(11) **EP 3 665 609 B1**
(45) Date de publication et mention de la délivrance du brevet: **25.08.2021**
(21) Numéro de dépôt: 18752561.3
(22) Date de dépôt: 06.07.2018
(51) Int. Cl.: G06F 21/64, H04L 9/06, H04L 9/32

(54) **PROCÉDÉ ET SERVEUR DE CERTIFICATION D'UN DOCUMENT ÉLECTRONIQUE**
VERFAHREN UND SERVER ZUR ZERTIFIZIERUNG EINES ELEKTRONISCHEN DOKUMENTS
METHOD AND SERVER FOR CERTIFYING AN ELECTRONIC DOCUMENT

(30) Priorité: 09.08.2017 FR 1757598
(43) Date de publication de la demande: 17.06.2020
(73) Titulaire: ORANGE, 92130 Issy-les-Moulineaux (FR)
(72) Inventeur: TOPART, Laurent, 92326 Châtillon Cedex (FR); LEGAY, Philippe, 92326 Châtillon Cedex (FR); BASMADJIAN, Raffi, 92326 Châtillon Cedex (FR)
(86) Numéro de dépôt international: PCT/FR2018/051703
(87) Numéro de publication internationale: WO 2019/030436

(56) Documents cités:
- WO-A1-2017/004527
- WO-A1-2017/027900
- US-A1- 2017 155 515

## Description

### Arrière-plan de l'invention

L'invention se situe dans le domaine de la lutte contre la fraude documentaire.

Elle offre plus particulièrement une solution pour permettre la certification d'un document émis par une première entité pour une deuxième entité.

L'invention trouve une application particulière pour lutter contre la fraude bancaire en offrant une solution permettant de sécuriser la transmission de coordonnées bancaires entre un client et un fournisseur. Le document de l'état de la technique US-2017/0155515-A1 divulgue un système capable de traiter plusieurs types de transactions et d'assurer la confidentialité de ces transactions. Le document de l'état de la technique WO-2017/004527-A1 divulgue un système gérant des transactions de type blockchain.

### Objet et résumé de l'invention

Selon un premier aspect, l'invention concerne un procédé de certification d'un document électronique, ce procédé étant mis en œuvre par un dispositif pair dans un réseau de pairs, ces dispositifs pairs étant configurés pour stocker une copie d'une chaîne de blocs selon un mécanisme de type « blockchain ». Ce procédé est caractérisé en ce qu'il comporte :
- une étape d'authentification d'un dispositif pair émetteur de ce document ;
- une étape de génération, pour ledit dispositif pair émetteur, d'un couple clef publique/clef privée à usage unique ;
- une étape d'envoi, au dispositif pair émetteur, d'un message comportant ladite clef publique, l'adresse d'un contrat intelligent dans la chaine de blocs et une description des services offerts par ce contrat intelligent ;
- une étape de réception d'un bloc de ladite chaine et de détection, dans ce bloc, d'un événement représentatif d'une écriture dans ledit contrat intelligent, d'une empreinte d'un document émis par le dispositif pair émetteur et d'une signature de cette empreinte ;
- une étape de vérification de la validité de ladite signature avec ladite clef privée ;
- une étape d'envoi d'une transaction aux dispositifs pairs pour leur demander d'exécuter une fonction du contrat intelligent ayant pour effet d'enregistrer dans un bloc de la chaîne, une information représentative du fait que l'empreinte du document a été certifiée par ledit dispositif pair.

Corrélativement l'invention concerne un serveur de certification d'un document électronique, ce serveur étant un dispositif pair dans un réseau de pairs, les dispositifs pairs dudit réseau étant configurés pour stocker une copie d'une chaîne de blocs selon un mécanisme de type « blockchain », ledit serveur étant caractérisé en ce qu'il comporte :
- une unité d'authentification d'un dispositif pair émetteur de ce document ;
- une unité de génération, pour ledit dispositif pair émetteur, d'un couple clef publique/clef privée à usage unique ;
- une unité d'envoi, au dispositif pair émetteur, d'un message comportant ladite clef publique, l'adresse d'un contrat intelligent dans la chaine de blocs et une description des services offerts par ce contrat intelligent ;
- une unité de réception d'un bloc de ladite chaine et de détection, dans ce bloc, d'un événement représentatif d'une écriture dans ledit contrat intelligent, d'une empreinte d'un document émis par ledit dispositif émetteur et d'une signature de cette empreinte ;
- une unité de vérification de la validité de ladite signature avec ladite clef privée ;
- une unité d'envoi d'une transaction aux dispositifs pairs pour leur demander d'exécuter une fonction du contrat intelligent ayant pour effet d'enregistrer dans un bloc de la chaîne, une information représentative du fait que l'empreinte du document a été certifiée par ledit serveur de certification.

On rappelle qu'un contrat intelligent (en anglais « Smart Contract ») est un programme exécutable stocké et exécuté dans la chaîne de blocs, un tel programme permettant de stocker des données et d'effectuer des transactions sur la chaîne de blocs.

Ainsi et d'une façon générale, l'invention propose d'utiliser une chaîne de blocs pour garantir à la fois l'intégrité et l'authenticité d'un document.

L'invention utilise à cet effet les propriétés intrinsèques aux chaînes de blocs pour garantir l'intégrité du document, l'empreinte d'un document étant en pratique infalsifiable dès lors qu'elle a été enregistrée dans la chaîne.

Conformément à l'invention, l'authenticité du document est vérifiée par un mécanisme de clefs, par exemple de clefs RSA, la preuve de l'authenticité du document, autrement dit la preuve que l'empreinte du document a bien été enregistrée par un utilisateur autorisé, étant elle-même enregistrée dans un bloc de la chaîne.

Dans un mode particulier de réalisation, le message envoyé au dispositif pair émetteur comporte en outre l'adresse d'une application décentralisée à laquelle ledit dispositif pair émetteur peut se connecter pour recevoir un code exécutable pour interagir avec ladite chaîne de blocs, l'exécution de ce code exécutable permettant d'obtenir l'adresse du contrat intelligent et la description des services offerts par ce contrat intelligent.

Cette application décentralisée peut être une Dapp connue de l'homme du métier. L'utilisation d'une telle application décentralisée, permet d'améliorer l'ergonomie et d'enrichir le service de certification conforme à l'invention.

On rappelle qu'une Dapp est une application écrite en html/JavaScript qui utilise la chaîne de blocs comme *back-end* via l'appel aux fonctions du contrat intelligent.

Dans un mode particulier de réalisation, le procédé de certification selon l'invention comporte en outre :
- une étape de réception d'une empreinte du document en provenance d'une entité propriétaire du document ; et
- une étape de vérification que ladite empreinte est identique à celle enregistrée dans la chaîne de blocs et si c'est le cas, une étape d'exécution d'une deuxième fonction du contrat intelligent pour écrire, dans un bloc de ladite chaîne, une information représentative du fait que ledit document a été validé par son propriétaire.

Le serveur de certification selon l'invention présume que l'entité propriétaire du document n'envoie l'empreinte du document qu'après avoir certifié le document, autrement dit après avoir vérifié que le document émis par le dispositif pair émetteur ne comporte pas d'erreur. Par exemple, dans le cas d'un relevé d'identité bancaire, le propriétaire du document vérifie, avant d'envoyer l'empreinte de ce relevé, que les nom, adresse et numéro de compte figurant sur ce relevé sont corrects.

Dans un mode particulier de réalisation, le procédé de certification selon l'invention comporte en outre :
- une étape de réception d'une empreinte du document en provenance d'une entité vérificatrice du document ; et
- une étape de vérification que ladite empreinte est identique à celle enregistrée dans la chaîne de blocs.

Le serveur de certification peut ainsi s'assurer :
- de la validité de la signature avec la clef privée, preuve que le document a bien été émis par un pair autorisé ;
- que le document a bien été certifié par son propriétaire ; et
- que le document a bien été vérifié par l'entité vérificatrice du document.

L'invention permet ainsi au serveur de certification, lorsqu'il reçoit une indication selon laquelle un document a été certifié par l'entité propriétaire et/ou par l'entité vérificatrice, de vérifier que l'empreinte de ce document a bien été inscrite dans un bloc de la chaîne par un pair autorisé, autrement dit de vérifier que ce document n'a pas été frauduleusement envoyé à l'une ou l'autre de ces entités par un tiers mal intentionné.

L'invention peut s'appliquer à tout type de lutte contre les fraudes documentaires. Elle permet en particulier de lutter contre les fraudes aux coordonnées bancaires, par exemple contre les falsifications de relevés d'identité bancaires (RIB), une telle falsification ayant pour conséquence qu'un client ne paye pas le compte du bon fournisseur mais un compte correspondant à des coordonnées falsifiées.

L'invention permet de certifier :
- que c'est effectivement la banque qui a inséré l'empreinte du document (autrement dit l'empreinte du RIB) dans la chaîne de blocs ;
- que l'empreinte de ce document, une fois insérée dans la chaine de blocs est infalsifiable ;

Dans un mode particulier de réalisation, les différentes étapes du procédé de certification selon l'invention sont déterminées par des instructions de programmes d'ordinateurs.

En conséquence, l'invention vise aussi un programme d'ordinateur, sur un support d'informations, ce programme comportant des instructions adaptées à la mise en œuvre des étapes d'un procédé de certification selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Pour plus de renseignements sur les notions de chaine de blocs, de contrat intelligent et d'application décentralisée, l'homme du métier peut se reporter aux documents :
- https://fr.wikipedia.org/wiki/Cha%C3%AEne_de_blocs
- https://blockchainfrance.net/decouvrir-la-blockchain/c-est-quoi-la-blockchain/
- https://github.com/ethereum/wiki/wiki/White-Paper ;
- S.Nakamoto « Bitcoin: A Peer-to-Peer Electronic Cash System ».

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un serveur de certification conforme à un mode particulier de mise en œuvre de l'invention dans son environnement; et
- la figure 2 représente, sous forme d'organigramme, les principales étapes d'un procédé de certification conforme à un mode particulier de réalisation de l'invention.

### Description détaillée d'un mode de réalisation de l'invention

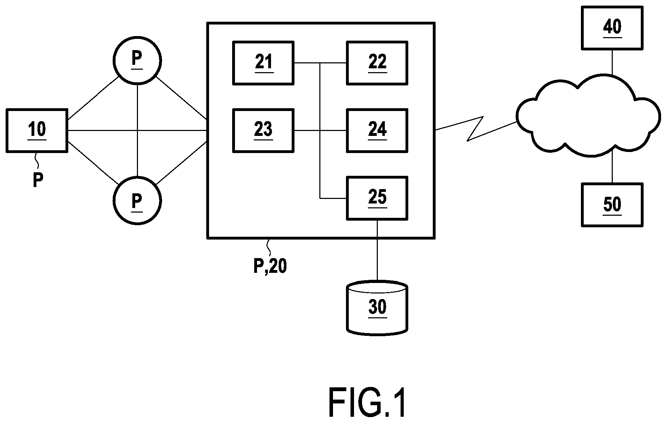

La figure 1 représente un serveur de certification 20 conforme à un mode particulier de réalisation de l'invention dans son environnement.

Ce serveur de certification 20 est un pair P d'un réseau de pairs P, chacun de ces pairs P étant configuré pour stocker une copie d'une chaîne de blocs au sens de la technologie « blockchain ».

Dans l'exemple de réalisation décrit ici, la chaîne de blocs utilisée est une chaîne de blocs programmable permettant de créer des contrats intelligents (en anglais « SmartContract ») et des applications décentralisées (en anglais « Dapp »), par exemple la chaîne de blocs Ethereum.

On rappelle que conformément à la technologie Ethereum, le réseau de pairs comporte deux types de pairs, à savoir :
- des pairs dits « mineurs » qui stockent les transactions dans un bloc, et régulièrement, par exemple tous les 12 secondes, réalisent une opération dite de minage consistant à exécuter ces transactions, écrire le résultat de ces transactions dans le bloc, calculer une empreinte du bloc (nonce) au moyen d'une fonction mathématique, et diffuser ce bloc dans le réseau de pairs ; et
- des pairs simples qui reçoivent les blocs générés, en vérifient la validité et mémorisent une copie de la chaîne de blocs.

Dans le mode de réalisation décrit ici, le serveur de certification 20 a l'architecture matérielle d'un ordinateur. Il comporte un processeur 21, une mémoire morte de type ROM 22, une mémoire vive de type RAM 23 et des moyens de communication 24 et des moyens 25 d'accès à un gestionnaire de base de données 30.

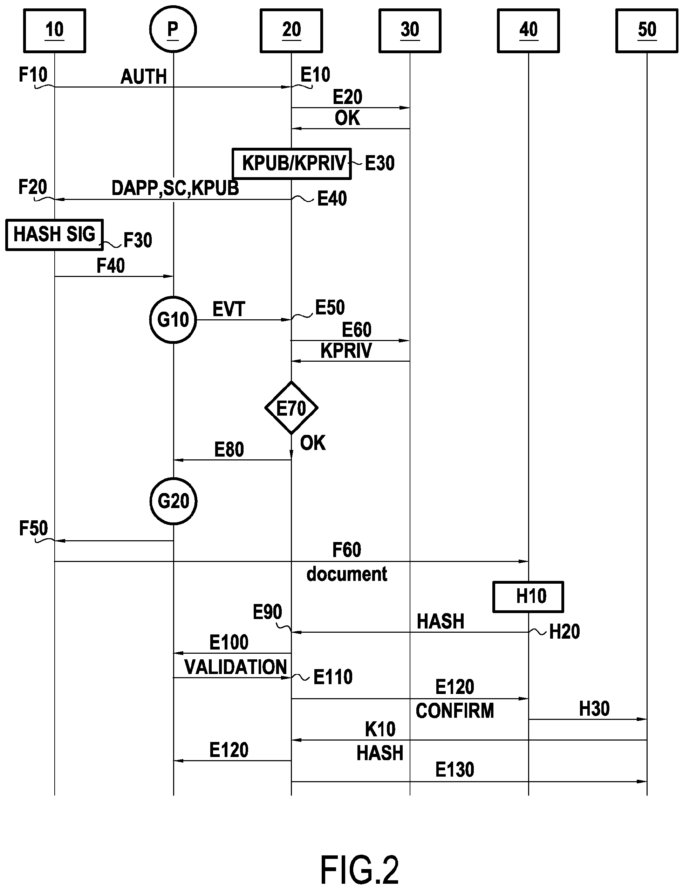

La mémoire morte de type ROM 22 constitue un support d'enregistrement au sens de l'invention. Elle comporte un programme d'ordinateur conforme à l'invention et comportant des instructions aptes à mettre en œuvre un procédé de certification conforme à l'invention et dont les principales étapes E10 à E130 seront décrites en référence à la figure 2.

Le serveur de certification 20 comporte
- une unité d'authentification d'un dispositif pair, par exemple à partir d'un identifiant (login) et d'un mot de passe reçus de ce dispositif pair;
- une unité de génération d'un couple clef publique/clef privée à usage unique ;
- une unité apte à envoyer, à un dispositif pair du réseau, un message comportant une clef publique, l'adresse d'un contrat intelligent dans la chaine de blocs et une description des services offerts par ce contrat intelligent (en anglais ABI pour Application Binary Interface) ;
- une unité de réception d'un bloc de ladite chaine et de détection, dans ce bloc, d'un événement représentatif d'une écriture dans le contrat intelligent, d'une empreinte d'un document et d'une signature de cette empreinte ;
- une unité de vérification de la validité d'une signature effectuée avec une clef publique en utilisant une clef privée associée à cette clef publique;
- une unité d'envoi d'une transaction aux dispositifs pairs pour leur demander d'exécuter une fonction du contrat intelligent ayant pour effet d'enregistrer dans un bloc de la chaîne, une information représentative du fait que l'empreinte d'un document a été certifiée par ledit serveur de certification.

Dans le mode de réalisation décrit ici, on suppose que le réseau de pairs P comporte un dispositif pair 10 émetteur (par exemple une banque) d'un document (par exemple un relevé d'identité bancaire, RIB).

Sur la figure 1 on a également représenté une entité 40 propriétaire du document (par exemple une société fournisseur dont le compte bancaire correspond au RIB émis par la banque) et une entité vérificatrice 50 qui souhaite pouvoir s'assurer de l'intégrité et de l'authenticité du document (par exemple un client de la société fournisseur).

Dans le mode de réalisation décrit ici, l'entité 40 propriétaire du document et l'entité vérificatrice 50, ne sont pas des pairs du réseau de pairs. Elles n'ont pas accès à la chaîne de blocs.

La figure 2 représente les principales étapes E10 à E130 d'un procédé de certification conforme à un mode particulier de réalisation de l'invention.

On se place dans le contexte dans lequel le dispositif pair émetteur 10 souhaite certifier un document électronique, par exemple un RIB.

Au cours d'une étape F10, le dispositif pair émetteur 10 envoie une requête d'authentification au serveur de certification 20 selon l'invention pour s'authentifier auprès de ce serveur, ladite requête comportant par exemple un identifiant et un mot de passe. Le serveur de certification 20 reçoit cette requête au cours d'une étape E10.

Sur réception de cette requête d'authentification, le serveur de certification 20 vérifie, au cours d'une étape E20, les données de connexion auprès d'un système de gestion de base de données 30 comportant des certificats associés à des utilisateurs. On suppose par la suite que les données de connexion sont valides et que l'authentification du dispositif pair émetteur 10 réussit.

Conformément à l'invention, le serveur de certification génère pour le dispositif pair émetteur 10, au cours d'une étape E30 un couple clef publique/clef privée (KPUB, KPRIV) à usage unique. Ces clefs sont mémorisées par le système de gestion de bases de données 30.

Au cours d'une étape E40, le serveur de certification 20 envoie au dispositif pair émetteur 10 un message de réponse à la requête d'authentification, ce message comportant au moins :
- l'adresse d'une application décentralisée DAPP à laquelle le dispositif pair émetteur 10 peut se connecter pour recevoir un code exécutable pour interagir avec la chaîne de blocs, par exemple un code JavaScript compris dans une page HTML. L'exécution de ce code exécutable permet d'obtenir l'adresse d'un contrat intelligent SC (en anglais « Smart Contract » au sens de la technologie « blockchain ») dans la chaîne de blocs intelligent et la description ABI des services ou fonctions offerts par ce contrat ; et
- la clef publique KPUB générée pour le dispositif client à l'étape E30 ; et

Ce message de réponse est reçu par le dispositif pair émetteur 10 au cours d'une étape F20.

Au cours d'une étape F30, le dispositif pair émetteur 10 utilise l'application décentralisée DAPP pour calculer une empreinte HASH du document, par exemple avec une fonction de hachage, et calculer une signature SIG de cette empreinte en utilisant la clef publique KPUB reçue du serveur de certification 20. La clef publique KPUB n'est utilisable qu'une seule fois.

Au cours d'une étape F40, le dispositif pair émetteur 10 diffuse une requête dans le réseau de pairs, cette requête comportant l'empreinte HASH du document, la signature SIG de cette empreinte et l'adresse du contrat intelligent SC dans la chaîne de blocs reçue à l'étape F20. Cette requête constitue une transaction au sens de la technologie « blockchain ». Elle est reçue par les dispositifs pairs P du réseau de pairs.

Certains pairs mineurs réalisent une opération de minage au sens de la technologie « blockchain », au cours d'une étape G10.

Cette opération de minage (étape G10) consiste à exécuter le contrat intelligent SC dans la chaîne de blocs pour écrire dans le bloc courant l'empreinte HASH du document et la signature SIG de cette empreinte. Conformément aux avantages de la technologie « blockchain », ces informations (empreinte du document, signature de l'empreinte) deviennent infalsifiables dès lors que quelques blocs supplémentaires ont été ajoutés à la chaîne de blocs.

Cette opération d'écriture dans la chaîne de blocs génère un événement d'écriture EVT par le contrat intelligent CS.

Le dispositif mineur diffuse ce bloc à tous les dispositifs pairs de la chaîne de blocs, conformément à la technologie « blockchain ».

Le serveur de certification 20, en tant que pair du réseau, reçoit ce nouveau bloc, en vérifie la validité et y détecte, au cours d'une étape E50, un événement représentatif de l'écriture dans le contrat.

Au cours d'une étape E60, le serveur de certification 20 interroge le gestionnaire de base de données 30 pour obtenir la clef privée à usage unique KPRIV générée pour le dispositif client 10 à l'étape E30. Il vérifie au cours d'une étape E70 que l'empreinte du document a bien été signée par la clef publique correspondante, autrement dit par le dispositif client 10. On suppose par la suite que c'est le cas.

Au cours d'une étape E80, le serveur de certification 20 envoie une transaction aux dispositifs pairs P pour leur demander d'exécuter une fonction du contrat intelligent, l'exécution de cette fonction ayant pour effet d'enregistrer dans un bloc de la chaîne, une information représentative du fait que l'empreinte du document a été certifiée par le serveur de certification. Cette information peut par exemple être constituée par valeur booléenne.

Au cours d'une étape G20, certains pairs mineurs exécutent cette transaction, et essaient de valider le bloc. Les mineurs qui y parviennent diffusent le bloc aux dispositifs pairs de la chaîne de blocs.

Au cours d'une étape F50, les dispositifs pairs (et notamment le dispositif pair émetteur 10) reçoivent ce bloc et le valident.

On rappelle que dans le mode de réalisation décrit ici, l'entité 40 propriétaire du document et l'entité 50 vérificatrice n'ont pas accès à la chaîne de blocs.

Le serveur de certification 20 constitue une passerelle pour que ces entités puissent confirmer le document ou vérifier que le document est valide.

Une fois que l'utilisateur du dispositif pair émetteur 10 a eu confirmation que son document a été validé par le serveur de certification 20, il envoie le document, au cours d'une étape F60, à l'entité 40 propriétaire du document.

L'entité propriétaire du document 40 (par exemple la Société Fournisseur) vérifie que les informations (ses données bancaires) contenues dans le document (RIB) sont valides.

Si tel est le cas, l'entité propriétaire du document 40 calcule (étape H10) une empreinte HASH du document, la transmet au serveur de certification 20, et demande à ce serveur de certification 20, via l'application distribuée DAPP, de marquer le document comme validé par son propriétaire (étape H20).

Le serveur de certification 20 reçoit cette empreinte HASH au cours d'une étape E90. Il vérifie que cette empreinte est identique à celle enregistrée dans la chaîne de blocs et si c'est le cas exécute (étape E100) une nouvelle fonction du contrat intelligent CS de la chaîne de blocs ayant pour effet de positionner une valeur booléenne à « VRAI » représentative du fait que le document a été validé par son propriétaire.

L'exécution de cette fonction du contrat génère un événement de « VALIDATION ». Lorsque le serveur de certification 20 détecte cet événement (étape E110), il envoie un message de confirmation au propriétaire du document (étape E120).

L'entité 40 propriétaire du document envoie le document à l'entité vérificatrice 50 au cours d'une étape H30.

L'entité 50 vérificatrice du document envoie une empreinte HASH du document au serveur 20 de certification au cours d'une étape K10, pour lui demander de le certifier . Le serveur de certification reçoit cette empreinte au cours d'une étape E120.

Au cours de cette même étape E120 le serveur de certification 20 vérifie dans la chaîne de blocs si l'empreinte est valable.

Dans l'exemple de réalisation décrit ici, le serveur de certification 20 vérifie:
- la validité de la signature avec la clef privée KPRIV, preuve que le document a bien été émis par un pair autorisé ;
- que le document a bien été certifié par l'entité propriétaire 40, ce qui est considéré comme tel dès lors qu'une empreinte valide a été reçue de cette entité à l'étape E90 ; et
- l'empreinte reçue de l'entité vérificatrice 50.

Si tel est le cas, le serveur de certification 20 envoie un message de confirmation à l'entité 50 vérificatrice du document au cours d'une étape E130.

## Revendications

1. Procédé de certification d'un document électronique, ledit procédé étant mis en œuvre par un dispositif pair (20) dans un réseau de pairs, lesdits dispositifs pairs étant configurés pour stocker une copie d'une chaîne de blocs selon un mécanisme de type « blockchain », ledit procédé étant **caractérisé en ce qu'**il comporte :
- une étape (E20) d'authentification d'un dispositif pair (10) émetteur de ce document ;
- une étape (E30) de génération, pour ledit dispositif pair émetteur (10), d'un couple clef publique/clef privée (KPUB, KPRIV) à usage unique ;
- une étape (E40) d'envoi, au dispositif pair émetteur (10), d'un message comportant ladite clef publique (KPUB), l'adresse d'un contrat intelligent (CS) dans la chaine de blocs, et une description (ABI) des services offerts par ce contrat intelligent (CS) ;
- une étape (E50) de réception d'un bloc de ladite chaine et (E60) de détection, dans ce bloc, d'un événement représentatif d'une écriture dans ledit contrat intelligent (CS), d'une empreinte (HASH) d'un document émis par ledit dispositif émetteur (10) et d'une signature (SIG) de cette empreinte ;
- une étape (E70) de vérification de la validité de ladite signature avec ladite clef privée (KPRIV) ;
- une étape (E80) d'envoi d'une transaction aux dispositifs pairs (P) pour leur demander d'exécuter une fonction du contrat intelligent ayant pour effet d'enregistrer dans un bloc de la chaîne, une information représentative du fait que l'empreinte du document a été certifiée par ledit dispositif pair (20).

2. Procédé de certification d'un document électronique selon la revendication 1, **caractérisé en ce que** ledit message comporte en outre l'adresse d'une application décentralisée (DAPP) à laquelle ledit dispositif pair émetteur (10) peut se connecter pour recevoir un code exécutable pour interagir avec ladite chaîne de blocs, l'exécution de ce code exécutable permettant d'obtenir ladite l'adresse du contrat intelligent (CS) et ladite description (ABI) des services offerts par ce contrat intelligent (CS).

3. Procédé de certification d'un document électronique selon la revendication 1 ou 2, **caractérisé en ce qu'**il comporte en outre :
- une étape (E90) de réception d'une empreinte (HASH) du document en provenance d'une entité (40) propriétaire du document ; et
- une étape (E90) de vérification que ladite empreinte est identique à celle enregistrée dans la chaîne de blocs et si c'est le cas, une étape (E100) d'exécution d'une deuxième fonction dudit contrat intelligent (CS) pour écrire, dans un bloc de ladite chaîne, une information représentative du fait que ledit document a été validé par son propriétaire.

4. Procédé de certification d'un document électronique selon la revendication 3, **caractérisé en ce qu'**il comporte en outre :
- une étape (E120) de réception d'une empreinte (HASH) du document en provenance d'une entité (50) vérificatrice du document ; et
- une étape (E120) de vérification que ladite empreinte est identique à celle enregistrée dans la chaîne de blocs.

5. Serveur (20) de certification d'un document électronique, ledit serveur étant un dispositif pair (20) dans un réseau de pairs, les dispositifs pairs dudit réseau étant configurés pour stocker une copie d'une chaîne de blocs selon un mécanisme de type « blockchain », ledit serveur étant **caractérisé en ce qu'**il comporte :
- une unité d'authentification d'un dispositif pair (10) émetteur de ce document ;
- une unité de génération, pour ledit dispositif pair émetteur (10), d'un couple clef publique/clef privée (KPUB, KPRIV) à usage unique ;
- une unité d'envoi, au dispositif pair émetteur (10), d'un message comportant ladite clef publique (KPUB), l'adresse d'un contrat intelligent (CS) dans la chaine de blocs et une description (ABI) des services offerts par ce contrat intelligent (CS) ;
- une unité de réception d'un bloc de ladite chaine et de détection, dans ce bloc, d'un événement représentatif d'une écriture dans ledit contrat intelligent (CS), d'une empreinte (HASH) d'un document émis par ledit dispositif émetteur (10) et d'une signature (SIG) de cette empreinte ;
- une unité de vérification de la validité de ladite signature avec ladite clef privée (KPRIV) ;
- une unité d'envoi d'une transaction aux dispositifs pairs (P) pour leur demander d'exécuter une fonction du contrat intelligent ayant pour effet d'enregistrer dans un bloc de la chaîne, une information représentative du fait que l'empreinte du document a été certifiée par ledit serveur de certification (20).

6. Programme d'ordinateur sur un support d'information, ledit programme étant susceptible d'être mis en œuvre par un ordinateur, ce programme comportant des instructions adaptées à la mise en œuvre d'un procédé de certification selon l'une quelconque des revendications 1 à 4.

7. Support d'enregistrement lisible par un ordinateur (20) sur lequel est enregistré un programme d'ordinateur comprenant des instructions pour l'exécution des étapes du procédé de certification d'information selon l'une quelconque des revendications 1 à 4.

## Patentansprüche

1. Verfahren zur Zertifizierung eines elektronischen Dokuments, wobei das Verfahren von einer Peer-Vorrichtung (20) in einem Peer-Netzwek umgesetzt wird, wobei die Peer-Vorrichtungen dazu ausgebildet sind, eine Kopie einer Kette aus Blöcken gemäß einem Mechanismus vom "Blockchain"-Typ zu speichern, wobei das Verfahren **dadurch gekennzeichnet ist, dass** es Folgendes aufweist:
- einen Schritt (E20) des Authentifizierens einer Peer-Vorrichtung (10), die dieses Dokument sendet;
- einen Schritt (E30) des Erzeugens, für die sendende Peer-Vorrichtung (10) eines Paars aus einem öffentlichen Schlüssel/privaten Schlüssel (KPUB, KPRIV) zur Einmalnutzung;
- einen Schritt (E40) des Sendens, an die sendende Peer-Vorrichtung (10), einer Nachricht mit dem öffentlichen Schlüssel (KPUB), der Adresse eines intelligenten Kontrakts (CS) in der Kette aus Blöcken, und einer Beschreibung (ABI) der Dienste, die von diesem intelligenten Kontrakt (CS) angeboten werden;
- einen Schritt (E50) des Empfangens eines Blocks der Kette und (E60) des Erfassens, in diesem Block, eines Ereignisses, das für ein Schreiben eines Abdrucks (HASH) eines Dokuments, das von der sendenden Vorrichtung (10) gesendet wird, und einer Signatur (SIG) dieses Abdrucks in den intelligenten Kontrakt (CS) repräsentativ ist;
- einen Schritt (E70) des Überprüfens der Gültigkeit der Signatur mit dem privaten Schlüssel (KPRIV);
- einen Schritt (E80) des Sendens einer Transaktion an die Peer-Vorrichtungen (P), um sie aufzufordern, eine Funktion des intelligenten Kontrakts auszuführen, die bewirkt, dass eine Information, die dafür repräsentativ ist, dass der Abdruck des Dokuments von der Peer-Vorrichtung (20) zertifiziert wurde, in einen Block der Kette eingetragen wird.

2. Verfahren zur Zertifizierung eines elektronischen Dokuments nach Anspruch 1, **dadurch gekennzeichnet, dass** die Nachricht ferner die Adresse einer dezentralen Anwendung (DAPP) aufweist, mit der sich die sendende Peer-Vorrichtung (10) verbinden kann, um einen ausführbaren Code zur Interaktion mit der Kette aus Blöcken zu empfangen, wobei es die Ausführung dieses ausführbaren Codes gestattet, die Adresse des intelligenten Kontrakts (CS) und die Beschreibung (ABI) dieser Dienste, die von diesem intelligenten Kontrakt (CS) angeboten werden, zu erhalten.

3. Verfahren zur Zertifizierung eines elektronischen Dokuments nach Anspruch 1 oder 2, **dadurch gekennzeichnet, dass** es ferner Folgendes aufweist:
- einen Schritt (E90) des Empfangens eines Abdrucks (HASH) des Dokuments von einer Inhaberstelle (40) des Dokuments; und
- einen Schritt (E90) des Überprüfens, dass der Abdruck zu dem identisch ist, der in der Kette aus Blöcken eingetragen ist, und wenn dies der Fall ist, einen Schritt (E100) des Ausführens einer zweiten Funktion des intelligenten Kontrakts (CS), um eine Information, die dafür repräsentativ ist, dass das Dokument von seinem Inhaber validiert wurde, in einen Block der Kette zu schreiben.

4. Verfahren zur Zertifizierung eines elektronischen Dokuments nach Anspruch 3, **dadurch gekennzeichnet, dass** es ferner Folgendes aufweist:
- einen Schritt (E120) des Empfangens eines Abdrucks (HASH) des Dokuments von einer Überprüfungsstelle (50) des Dokuments; und
- einen Schritt (E120) des Überprüfens, dass der Abdruck zu dem identisch ist, der in der Kette aus Blöcken eingetragen ist.

5. Server (20) zur Zertifizierung eines elektronischen Dokuments, wobei der Server eine Peer-Vorrichtung (20) in einem Peer-Netzwek ist, wobei die Peer-Vorrichtungen des Netzwerks dazu ausgebildet sind, eine Kopie einer Kette aus Blöcken gemäß einem Mechanismus vom "Blockchain"-Typ zu speichern, wobei der Server **dadurch gekennzeichnet ist, dass** er Folgendes aufweist:
- eine Einheit zum Authentifizieren einer Peer-Vorrichtung (10), die dieses Dokument sendet;
- eine Einheit zum Erzeugen, für die sendende Peer-Vorrichtung (10), eines Paars aus einem öffentlichen Schlüssel/privaten Schlüssel (KPUB, KPRIV) zur Einmalnutzung;
- eine Einheit zum Senden, an die sendende Peer-Vorrichtung (10), einer Nachricht mit dem öffentlichen Schlüssel (KPUB), der Adresse eines intelligenten Kontrakts (CS) in der Kette aus Blöcken und einer Beschreibung (ABI) der Dienste, die von diesem intelligenten Kontrakt (CS) angeboten werden;
- eine Einheit zum Empfangen eines Blocks der Kette und zum Erfassen, in diesem Block, eines Ereignisses, das für ein Schreiben eines Abdrucks (HASH) eines Dokuments, das von der sendenden Vorrichtung (10) gesendet wird, und einer Signatur (SIG) dieses Abdrucks in den intelligenten Kontrakt (CS) repräsentativ ist;
- eine Einheit zum Überprüfen der Gültigkeit der Signatur mit dem privaten Schlüssel (KPRIV);
- eine Einheit zum Senden einer Transaktion an die Peer-Vorrichtungen (P), um sie aufzufordern, eine Funktion des intelligenten Kontrakts auszuführen, die bewirkt, dass eine Information, die dafür repräsentativ ist, dass der Abdruck des Dokuments vom Zertifizierungsserver (20) zertifiziert wurde, in einen Block der Kette eingetragen wird.

6. Computerprogramm auf einem Informationsträger, wobei das Programm von einem Computer ausgeführt werden kann, wobei das Programm Anweisungen aufweist, die zur Umsetzung eines Zertifizierungsverfahrens nach einem der Ansprüche 1 bis 4 geeignet sind.

7. Computerlesbares Speichermedium (20), auf dem ein Computerprogramm gespeichert ist, das Anweisungen für die Ausführung der Schritte des Zertifizierungsverfahrens nach einem der Ansprüche 1 bis 4 umfasst.

## Claims

1. Method for certifying an electronic document, said method being implemented by a peer device (20) in a network of peers, said peer devices being configured so as to store a copy of a blockchain using a blockchain mechanism, said method being **characterized in that** it comprises:
- a step (E20) of authenticating a peer device (10) that issues this document;
- a step (E30) of generating, for said issuing peer device (10), a single-use public key/private key pair (KPUB, KPRIV);
- a step (E40) of sending, to the issuing peer device (10), a message containing said public key (KPUB), the address of a smart contract (CS) in the blockchain and a description (ABI) of the services offered by this smart contract (CS);
- a step (E50) of receiving a block of said chain and of detecting (E60), in this block, an event representative of a write operation to said smart contract (CS), a fingerprint (HASH) of a document issued by said issuing device (10) and a signature (SIG) of this fingerprint;
- a step (E70) of verifying the validity of said signature with said private key (KPRIV);
- a step (E80) of sending a transaction to the peer devices (P) in order to ask them to execute a function of the smart contract with the effect of recording, in a block of the chain, information representative of the fact that the fingerprint of the document has been certified by said peer device (20).

2. Method for certifying an electronic document according to Claim 1, **characterized in that** said message furthermore contains the address of a decentralized application (DAPP) to which said issuing peer device (10) is able to connect in order to receive an executable code in order to interact with said blockchain, executing this executable code making it possible to obtain said address of the smart contract (CS) and said description (ABI) of the services offered by this smart contract (CS).

3. Method for certifying an electronic document according to Claim 1 or 2, **characterized in that** it furthermore comprises:
- a step (E90) of receiving a fingerprint (HASH) of the document from an entity (40) that owns the document; and
- a step (E90) of verifying that said fingerprint is identical to the one recorded in the blockchain and, if this is the case, a step (E100) of executing a second function of said smart contract (CS) in order to write, to a block of said chain, information representative of the fact that said document has been validated by its owner.

4. Method for certifying an electronic document according to Claim 3, **characterized in that** it furthermore comprises:
- a step (E120) of receiving a fingerprint (HASH) of the document from an entity (50) that verifies the document; and
- a step (E120) of verifying that said fingerprint is identical to the one recorded in the blockchain.

5. Server (20) for certifying an electronic document, said server being a peer device (20) in a network of peers, the peer devices of said network being configured so as to store a copy of a blockchain using a blockchain mechanism, said server being **characterized in that** it has:
- a unit for authenticating a peer device (10) that issues this document;
- a unit for generating, for said issuing peer device (10), a single-use public key/private key pair (KPUB, KPRIV);
- a unit for sending, to the issuing peer device (10), a message containing said public key (KPUB), the address of a smart contract (CS) in the blockchain and a description (ABI) of the services offered by this smart contract (CS);
- a unit for receiving a block of said chain and for detecting, in this block, an event representative of a write operation to said smart contract (CS), a fingerprint (HASH) of a document issued by said issuing device (10) and a signature (SIG) of this fingerprint;
- a unit for verifying the validity of said signature with said private key (KPRIV);
- a unit for sending a transaction to the peer devices (P) in order to ask them to execute a function of the smart contract with the effect of recording, in a block of the chain, information representative of the fact that the fingerprint of the document has been certified by said certification server (20).

6. Computer program on an information medium, said program being able to be implemented by a computer, this program containing instructions designed to implement a certification method according to any one of Claims 1 to 4.

7. Computer (20)-readable recording medium on which a computer program comprising instructions for executing the steps of the information certification method according to any one of Claims 1 to 4 is recorded.
